# EUROPEAN PATENT APPLICATION

(11) **EP 4 089 420 A1**
(43) Date of publication of application: **16.11.2022**
(21) Application number: 20912346.2
(22) Date of filing: 10.01.2020
(51) Int. Cl.: G01N 35/02, G01N 35/04, G01N 35/00

(54) **SAMPLE ANALYSIS SYSTEM AND SAMPLE SCHEDULING METHOD THEREFOR**

(71) Applicant: Shenzhen Mindray Bio-Medical Electronics Co., Ltd., Shenzhen, Guangdong 518057 (CN)
(72) Inventor: HUANG, Lixin, Shenzhen, Guangdong 518057 (CN); LI, Jixin, Shenzhen, Guangdong 518057 (CN)
(74) Representative: KIPA AB
(86) International application number: PCT/CN2020/071533
(87) International publication number: WO 2021/138916

(57) **Abstract**

A sample analysis system and a sample scheduling method therefor. The sample scheduling method comprises: acquiring a scheduling threshold of an analysis device (30); acquiring the load condition of a front-end track area of the analysis device (30); if the load of the front-end track area of the analysis device (30) is less than or equal to the scheduling threshold of the analysis device (30), controlling the scheduling of a sample, which currently needs to enter the front-end track area of the analysis device (30) in order to be aspirated, to the front-end track area of the analysis device (30); and if the load of the front-end track area of the analysis device (30) is greater than the scheduling threshold of the analysis device (30), controlling the sample, which currently needs to enter the front-end track area of the analysis device (30), to wait in a buffer area.

## Description

### TECHNICAL FIELD

The invention relates to a sample analysis system and a sample scheduling method therefor.

### BACKGROUND

With the demand for testing a large number of samples, in order to achieve high throughput and shorten the time, a sample analysis system composed of a plurality of sample analysis devices has emerged. Generally, for such a system including a plurality of analysis devices, samples to be tested are uniformly input at a front end of the system (for example, an input module at the front end of the system), and then the system distributes the samples to be tested to one or more analysis devices for testing in sequence. Specifically, the system generally introduces a track, and the input module and each analysis device are connected through the track, so that the samples can be transferred from the input module to any analysis device for testing through the track.

In order to avoid some analysis devices being too busy and others being too idle, the system typically plans and schedules the samples to be tested to the corresponding analysis devices for testing according to a load balancing principle. For a simple example, when a current batch of samples to be tested need to be tested by both an analysis device 1 and an analysis device 2, some of the batch of the samples can be planned to be tested by the analysis device 1 first, and then tested by the analysis device 2. The rest of the samples are planned to be tested by the analysis device 2 first, and then tested by the analysis device 1. Therefore, neither the analysis device 1 nor the analysis device 2 is idle. From this perspective, test efficiency is relatively improved.

However, the solution that the system plans and schedules the samples to be tested to corresponding analysis device according to the load balancing principle is not flexible sometimes, and some new planning and scheduling principles need to be invented and proposed.

### SUMMARY

The invention mainly provides a sample analysis system and a sample scheduling method therefor.

According to a first aspect, an embodiment provides a sample scheduling method for a sample analysis system. The sample analysis system has a buffer area and includes a plurality of analysis devices. The sample scheduling method includes the following operations.

A scheduling threshold of an analysis device is acquired.

A load of a front-end track area of the analysis device is acquired.

When the load of the front-end track area of the analysis device is less than or equal to the scheduling threshold of the analysis device, a sample, which currently needs to enter the front-end track area of the analysis device in order to be aspirated, is controlled to be scheduled to transfer to the front-end track area of the analysis device.

When the load of the front-end track area of the analysis device is greater than the scheduling threshold of the analysis device, the sample, which currently needs to enter the front-end track area of the analysis device, is controlled to wait in the buffer area.

In an embodiment, the sample scheduling method may further include that: item information of the sample to be tested is acquired and a scheduling plan for the sample to be tested is determined according to the item information of the sample to be tested. The scheduling plan at least includes a target analysis device that needs to perform item detection on the sample to be tested and a path for the sample to be tested to reach the target analysis device.

In an embodiment, the operation that the item information of the sample to be tested is acquired and the scheduling plan for the sample to be tested is determined according to the item information of the sample to be tested may include the following actions.

The item information of the sample to be tested is received and acquired.

The sample to be tested is controlled to be scheduled to transfer to the buffer area for temporary storage.

The scheduling plan for each sample to be tested in the buffer area is determined according to the item information of each sample to be tested.

In an embodiment, the operation that the scheduling plan for each sample to be tested in the buffer area is determined according to the item information of each sample to be tested may include that: the scheduling plan for each sample to be tested is determined based on a load balancing principle of the analysis device after acquiring the item information of each sample to be tested.

In an embodiment, after controlling the sample, which currently needs to enter the front-end track area of the analysis device, to wait in the buffer area, whether a load of a front-end track area of another target analysis device corresponding to the sample is less than or equal to the scheduling threshold is further determined. When the load of the front-end track area of the another target analysis device corresponding to the sample is less than or equal to the scheduling threshold, the sample is controlled to be scheduled to transfer to the front-end track area of the another target analysis device in order to be aspirated.

In an embodiment, after controlling the sample, which currently needs to enter the front-end track area of the analysis device, to wait in the buffer area, whether a front-end track area of another target analysis device corresponding to the sample is not fully loaded and a load is less than or equal to the scheduling threshold is further determined. When the front-end track area of another target analysis device corresponding to the sample is not fully loaded and the load is less than or equal to the scheduling threshold, the sample is controlled to be scheduled to transfer to the front-end track area of the another target analysis device in order to be aspirated.

In an embodiment, the sample scheduling method may further include that: whether the front-end track area of the analysis device is fully loaded is further determined, and the sample, which currently needs to enter the front-end track area of the analysis device in order to be aspirated, is directly controlled to wait in the buffer area, when it is determined that the front-end track area of the analysis device is fully loaded.

In an embodiment, after directly controlling the sample, which currently needs to enter the front-end track area of the analysis device in order to be aspirated, to wait in the buffer area, whether a front-end track area of another target analysis device corresponding to the sample is not fully loaded and a load is less than or equal to the scheduling threshold is further determined. When the front-end track area of the another target analysis device corresponding to the sample is not fully loaded and the load is less than or equal to the scheduling threshold, the sample is controlled to be scheduled to transfer to the front-end track area of the another target analysis device in order to be aspirated.

In an embodiment, the scheduling threshold of the analysis device is determined based on analysis speeds of the analysis device for various items to be analyzed by the analysis device.

In an embodiment, the operation that the scheduling threshold of the analysis device is determined based on the analysis speeds of the analysis device for various items to be analyzed by the analysis device may include that: the analysis speeds of the analysis device for various items to be analyzed by the analysis device are multiplied by respective weights and the resulting analysis speeds are summed up, and the scheduling threshold of the analysis device is determined based on the summation.

In an embodiment, a weight of an item to be analyzed by the analysis device may be negatively correlated to the analysis speed of the analysis device for the item.

According to a second aspect, an embodiment provides a sample analysis system, which includes an input part, a plurality of analysis devices, a scheduling apparatus, and a processor.

The input part is arranged to receive a sample to be tested.

The plurality of analysis devices are arranged to test the sample. Each of the plurality of analysis devices is configured with a front-end track area, and the front-end track area is provided with a sample aspirating position.

The track is arranged to connect the input part and the plurality of analysis devices.

The scheduling apparatus is arranged to schedule the sample to transfer, through the track, from the input part to a front-end track area of an analysis device corresponding to the sample.

The buffer area is arranged to buffer the sample.

The processor is arranged to: acquire a scheduling threshold of the analysis device and a load of the front-end track area of the analysis device; and control scheduling of the sample, which currently needs to enter the front-end track area of the analysis device in order to be aspirated, according to a relationship between the scheduling threshold of the analysis device and the load of the front-end track area of the analysis device.

In an embodiment, when controlling the scheduling of the sample, which currently needs to enter the front-end track area of the analysis device in order to be aspirated, according to the relationship between the scheduling threshold of the analysis device and the load of the front-end track area of the analysis device, the processor may further be arranged to perform the following operations.

When the load of the front-end track area of the analysis device is less than or equal to the scheduling threshold of the analysis device, the processor may be arranged to control the sample, which currently needs to enter the front-end track area of the analysis device in order to be aspirated, to be scheduled to transfer to the front-end track area of the analysis device.

When the load of the front-end track area of the analysis device is greater than the scheduling threshold of the analysis device, the processor may be arranged to control the sample, which currently needs to enter the front-end track area of the analysis device, to wait in the buffer area.

In an embodiment, the buffer area may be arranged in the input part. The processor may be further arranged to acquire item information of the sample to be tested and control the input part to schedule the sample to be tested to transfer to the buffer area for temporary storage. The processor may be further arranged to determine a scheduling plan for each sample to be tested in the buffer area according to the item information of each sample to be tested. The scheduling plan may at least include a target analysis device that needs to perform item detection on the sample to be tested and a path for the sample to be tested to reach the target analysis device.

In an embodiment, after controlling the sample, which currently needs to enter the front-end track area of the analysis device, to wait in the buffer area, the processor may further be arranged to determine whether a load of a front-end track area of another target analysis device corresponding to the sample is less than or equal to the scheduling threshold. When the load of the front-end track area of the another target analysis device corresponding to the sample is less than or equal to the scheduling threshold, the processor may be arranged to control the sample to be scheduled to transfer to the front-end track area of the another target analysis device in order to be aspirated.

In an embodiment, the processor may further be arranged to determine whether the front-end track area of the analysis device is fully loaded, and directly control the sample, which currently needs to enter the front-end track area of the analysis device in order to be aspirated, to wait in the buffer area when it is determined that the front-end track area of the analysis device is fully loaded.

In an embodiment, after directly controlling the sample, which currently needs to enter the front-end track area of the analysis device in order to be aspirated, to wait in the buffer area, the processor may further be arranged to determine whether the front-end track area of another target analysis device corresponding to the sample is not fully loaded and the load is less than or equal to the scheduling threshold. When the front-end track area of the another target analysis device corresponding to the sample is not fully loaded and the load is less than or equal to the scheduling threshold, the processor may be arranged to control the sample to be scheduled to transfer to the front-end track area of the another target analysis device in order to be aspirated.

In an embodiment, the scheduling threshold of the analysis device may be determined based on analysis speeds of the analysis device for various items to be analyzed by the analysis device. The analysis speeds of the analysis device for various items to be analyzed by the analysis device may be multiplied by respective weights and the resulting analysis speeds are summed up, and the scheduling threshold of the analysis device may be determined based on the summation. A weight of an item to be analyzed by the analysis device may be negatively correlated to the analysis speed of the analysis device for the item.

According to a third aspect, an embodiment provides a computer-readable storage medium having stored therein a program that, when executed by a processor, causes the processor to implement the method described in any embodiment herein.

### BRIEF DESCRIPTION OF THE DRAWINGS

FIG. 1 illustrates a schematic structural diagram of a sample analysis system according to an embodiment.
FIG. 2(a) illustrates a schematic structural diagram of an input part and a schematic diagram of a sample scheduling path therein according to an embodiment. FIG. 2(b) illustrates a schematic structural diagram of an input part and a schematic diagram of a sample scheduling path therein according to an embodiment.
FIG. 3 illustrates a schematic structural diagram of an input part according to another embodiment.
FIG. 4 illustrates a schematic structural diagram of an input part according to still another embodiment.
FIG. 5 illustrates a schematic structural diagram of a sample analysis system according to another embodiment, which includes analysis devices M1, M2... Mn.
FIG. 6 illustrates a schematic structural diagram of a sample analysis system according to still another embodiment.
FIG. 7 illustrates a flowchart of a sample scheduling method according to an embodiment.
FIG. 8 illustrates a flowchart of a sample scheduling method according to another embodiment.
FIG. 9 illustrates a flowchart of a sample scheduling method according to still another embodiment.
FIG. 10 illustrates a flowchart of a sample scheduling method according to yet another embodiment.
FIG. 11 illustrates a flowchart of a sample scheduling method according to yet another embodiment.
FIG. 12 illustrates a flowchart of a sample scheduling method according to yet another embodiment.
FIG. 13 illustrates a flowchart of a sample scheduling method according to yet another embodiment.

### DETAILED DESCRIPTION

The invention will be further described in detail below with reference to specific embodiments and accompanying drawings. Similar elements in different embodiments are denoted by associated similar reference signs. In the following embodiments, numerous specific details are described to provide a better understanding of the application. However, those skilled in the art will easily realize that part features therein may be omitted in some cases, or may be replaced by other elements, materials, and methods. In certain cases, some operations related to the application are not shown or described in the specification, so as to avoid the core part of the application being overwhelmed by excessive descriptions. It is unnecessary for those skilled in the art to describe these operations in detail. They can fully understand the relevant operations according to the description in the specification and general technical knowledge in the art.

In addition, the characteristics, operations, or features described in the specification may be combined in any appropriate mode to form various embodiments. Meanwhile, a sequence of various steps or actions in the method description may also be changed or adjusted in a mode that is apparent to those skilled in the art. Therefore, various sequences in the description and the accompanying drawings are only for the purpose of clearly describing a certain embodiment, and do not mean that they are necessary sequences, unless otherwise specified that a certain sequence must be followed.

Serial numbers of parts herein, such as "first" and "second", are only used to distinguish the described objects without any sequence or technical meaning. "Connection" and "coupling" mentioned in the application include both direct and indirect connection (coupling), unless otherwise specified.

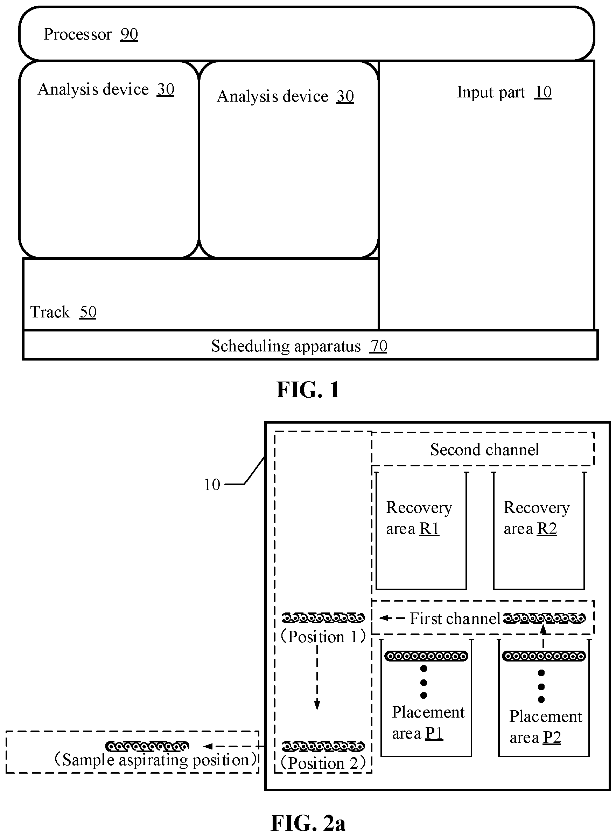

A sample analysis system includes a plurality of structures. Referring to FIG. 1, a sample analysis system according to an embodiment includes an input part 10, a plurality of analysis devices 30, a track 50, a scheduling apparatus 70, and a processor 90, which are specifically described below.

The input part 10 is configured to receive a sample to be tested. The input part 10 is generally an area for a user to place a sample. When the sample analysis system works, the input part 10 may automatically scan the sample placed therein to acquire label information of the sample. Information, such as a number of the sample and an item to be tested may be obtained through the label information of the sample. There are multiple solutions for implementing the input part 10. For example, the input part 10 may have a placement area and a recovery area. The placement area is arranged to carry a sample rack to be entered. The recovery area is arranged to receive the sample rack to be recovered, and an operator may recover the sample rack from the recovery area. In order to place, transfer, recover, and take out the sample racks in batches, the input part 10 may be provided with a plurality of placement areas and a plurality of recovery areas. In order to save a space, simplify a design and the like, these placement areas may share a transport channel, these recovery areas may also share a transport channel, and event these placement areas and the recovery areas share the same transport channel. The input part 10 with two placement areas and two recovery areas is described below as an example.

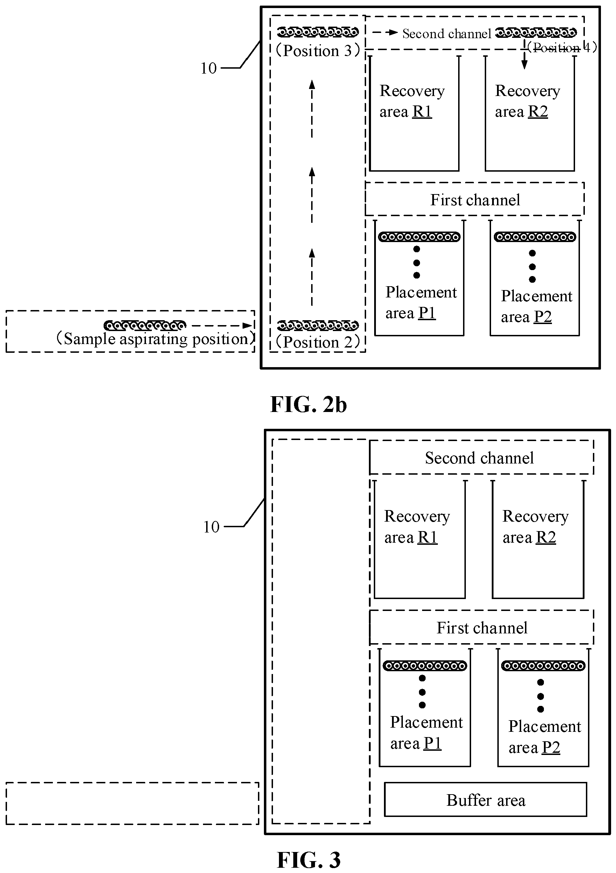

Referring to FIG. 2, the input part 10 includes a plurality of placement areas and a plurality of recovery areas, and includes a scheduling mechanism (not shown in the drawings). FIG. 2 shows an example with two placement areas and two recovery areas. The two placement areas P1 and P2 share a transport channel, which may be named as a first channel. The two recovery areas R1 and R2 also share a transport channel, which may be named as a second channel. As shown in FIG. 2(a), which illustrates a schematic diagram of a scheduling transfer path for feeding of the sample rack in the input part 10, the sample rack in the placement area is pushed into the first channel upwards by the scheduling mechanism. Whether the sample rack placed in the placement area P1 or P2 is scheduled depends on a current process. Generally, the input part 10 starts to schedule and transfer the sample racks in the next placement area after all sample racks in one placement area have been scheduled and transferred, and the figure shows that the sample rack in the placement area P2 is being fed. Then, the sample rack is pushed to pass to the left in the first channel by the scheduling mechanism. When being scheduled and transferred to position 1, the sample rack is continued to be scheduled and transferred downward to position 2 by the scheduling mechanism. Then, the sample rack is scheduled and transferred leftwards to each sample aspirating position corresponding to a respective analysis device 10. The sample in a sample tube on the sample rack is aspirated at the sample aspirating position. After all the sample tubes on the sample rack are sampled, the sample rack needs to be scheduled and transferred to the recovery area. As shown in FIG. 2(b), which illustrates a schematic diagram of a scheduling transfer path for recovery of the sample rack in the input part 10, the sample rack is scheduled and transferred rightwards to position 2 from the sample aspirating position by the scheduling mechanism after the sample suction is completed, then is scheduled and transferred upwards to position 3 from position 2, and then is scheduled and transferred rightwards to the second channel to enter the recovery area subsequently. Whether the sample rack enters the recovery area R1 or the recovery area R2 depends on the current process. Generally, the input part 10 schedules and transfers the sample rack that has been sampled back to one recovery area first. After the recovery area is full of sample racks, the scheduling mechanism schedules and transfers the sample rack that has been sampled to the next recovery area, and the figure shows that the recovery area R2 is the recovery area that accepts the sample rack to be recovered at present. Therefore, the sample rack is then scheduled and transferred rightwards to position 4 from position 3 by the scheduling mechanism, and pushed downward to the recovery area R2, so as to complete the recovery of the sample rack. Generally, a scanner (not shown in the drawings) may be arranged in the first channel, and is configured to scan a passing sample rack and/or various samples on the sample rack to acquire corresponding information, such as the information about the sample rack and the label information of the sample. It is to be noted that the up, down, left, and right directions involved in the sample rack scheduling and transferring are directions described with reference to the accompanying drawings, and do not necessarily mean real up, down, left, and right directions.

FIG. 3 illustrates a schematic structural diagram of an input part 10 according to another embodiment. Compared with FIG. 2, a buffer area is added to the input part 10 shown in FIG. 3. The buffer area may be arranged at the same layer as or a different layer from a layer where the placement area and the recovery area are located. For example, in order to make the structure of the input part 10 more compact and occupy a smaller area, the layer where the placement area and the recovery area are located are named as a first layer, and the buffer area may be arranged at a negative layer, that is, the lower layer of the first layer. The buffer area may have one or a plurality of functions as follows. 1) The buffer area may buffer the sample before the sample is tested. Specifically, the scheduling mechanism schedules the sample racks placed in the placement area to the buffer area first in sequence. The input part 10 may scan and acquire the label information of each sample that is scheduled to the buffer area for temporary storage, and then may schedule the samples to be tested uniformly. A scheduling plan at least include a target analysis device to which the sample to be tested needs to be sent. 2) The buffer area may buffer the sample that has been sampled by the analysis device. The sample waits for a test result in the buffer area, and it is determined whether the sample needs to be retested. If the sample needs to be retested, the sample will be scheduled to the corresponding analysis device for retesting, otherwise, the sample will be scheduled to the recovery area for recovery by a user.

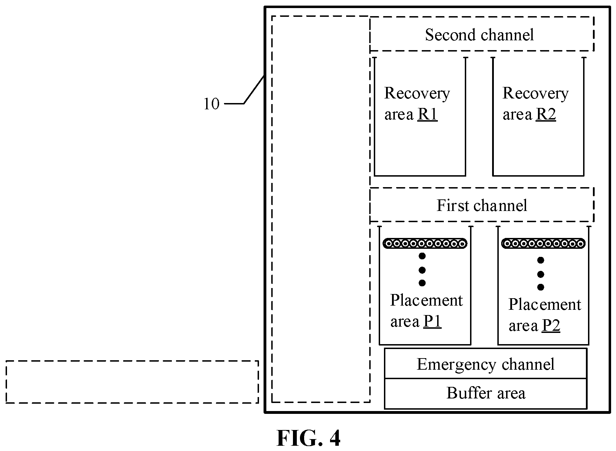

Referring to FIG. 4, on the basis of the input part 10 shown in FIG. 2 or FIG. 3, the input part 10 in some embodiments may further be provided with an emergency channel. The user may directly place a sample that needs to be expedited in the emergency channel to give priority to testing. Alternatively, in some embodiments, the input part 10 may scan and identify a common sample rack (or a non-emergency sample rack) and an emergency sample rack, so as to determine the priorities of scheduling and testing.

The analysis device 30 is configured to test a sample. In order to improve efficiency and a test throughput, the sample analysis system generally has a plurality of analysis devices 30, such as a biochemical analysis device, an immunoassay device, and a coagulation analysis device. These analysis devices 30 may be the analysis devices of the same model, or the analysis devices of different models, which may be configured according to the requirements of users and departments.

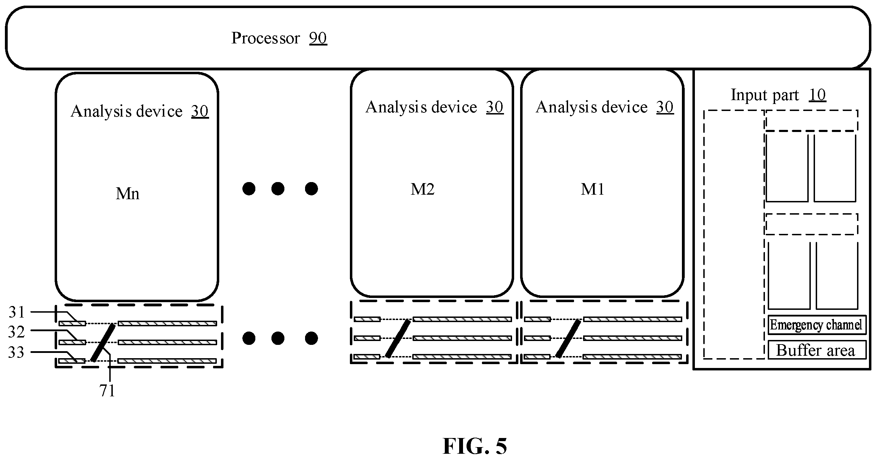

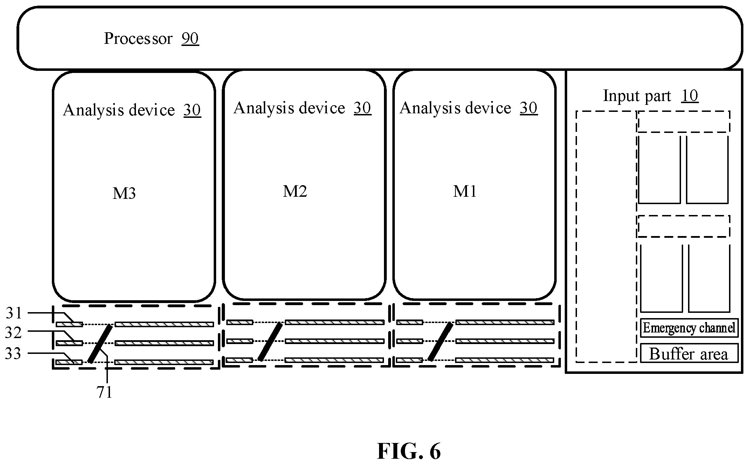

The track 50 is arranged to connect the input part 10 and various analysis devices 30. FIG. 5 illustrates an example in which the input part 10 is connected to the various analysis devices 30 through the track 50. Specifically, in some embodiments, each analysis device 30 has a front-end track area. The front-end track area is provided with a sample aspirating position. The abovementioned track 50 is arranged in the front-end track area of each analysis device 30. Specifically, the respective front-end track area of each analysis device 30 is provided with a plurality of parallel sub-tracks, and the track 50 is mainly composed of these sub-tracks. In some embodiments, the front-end track area may be provided with two parallel sub-tracks, namely, a feeding track 31 and a return track 33. The analysis device 30 adjacent to the input part 10, for example, an analysis device M1 in FIG. 5, has the front-end track area for receiving the sample scheduled from the input part 10. Corresponding tracks in the front-end track areas of adjacent analysis devices 30 are communicated with each other. For example, the feeding tracks 31 of the analysis device M1 and analysis device M2 in FIG. 5 are communicated with each other, and the return tracks 33 of the analysis device M1 and the analysis device M2 are communicated with each other. The sample reaches the sample aspirating position of the corresponding analysis device 30 through the feeding track 31. After being aspirated, the sample returns through the return track 33, for example, to the recovery area of the input part 10 finally. In some embodiments, referring to FIG. 6, the front-end track area may be provided with three parallel sub-tracks, namely, an emergency track 32 may also be arranged for feeding an emergency sample in addition to the feeding track 31 and the return track 33, while the feeding track 31 may be arranged to feed a routine sample. In this case, each front-end track area is provided with at least two sample aspirating positions, one is arranged for aspirating of the emergency sample on the emergency track 32, and the other is arranged for aspirating of the routine sample on the feeding track 31. It can be understood that the emergency tracks 32 in the front-end track areas of the adjacent analysis devices 30 are communicated with each other. For example, the emergency tracks 32 of the analysis device M1 and the analysis device M2 in FIG. 5 are communicated with each other. The emergency sample reaches the sample aspirating position of the corresponding analysis device 30 through the emergency track 32. After being aspirated, the emergency sample returns through the return track 33, for example, to the recovery area of the input part 10 finally.

The scheduling apparatus 70 is arranged to schedule the sample from the input part 10 to the front-end track area of a corresponding analysis device through the track 50. In some embodiments, the scheduling apparatus 70 further includes a track changing mechanism 71. The track changing mechanism 71 may change the track of the sample rack from the feeding track 31 and/or the emergency track 32 to the return track 33 in the front-end track area of the analysis device 30. In some embodiments, the track changing mechanism 71 may further change the track of the sample rack from the feeding track 31 of the analysis device 30 to the emergency track 32 of an adjacent analysis device 30. For example, the track of the sample rack on the feeding track 31 of the analysis device M1 may be changed to the emergency track 32 of the analysis device M2. In some embodiments, the track changing mechanism 34 may further change the track of the sample rack from the emergency track 32 of the analysis device 30 to the feeding track 31 of an adjacent analysis device 30.

A scheduling strategy for a sample rack will be described below.

In some solutions, samples are distributed to various analysis devices 30 using a load balancing principle, so as to avoid some analysis devices 30 being too idle, while some analysis devices 30 being too busy. The sample rack is scheduled based on a load balancing principle, which achieves a certain effect on improving the testing efficiency and the like. The inventor has found that analysis speeds or digestion speeds of different analysis devices for items are usually different. For example, generally, the analysis speed of the immunoassay device is relatively low, and the analysis speed of the biochemical analysis device is relatively high. It is very likely that the biochemical analysis device has completed the analysis of a plurality of items when the immunoassay device completes the analysis of one item (that is, from starting to aspirate the sample for the item to obtaining a test result). Therefore, it is necessary to consider this factor when formulating the scheduling strategy for the sample rack. The invention proposes a concept of a scheduling threshold of an analysis device. The scheduling threshold of the analysis device is used to characterize a speed of the analysis device for analyzing, testing, or digesting an item. The greater the scheduling threshold of the analysis device, the higher the speed of the analysis device for analyzing, testing, or digesting a test item assigned thereto. In some embodiments, the scheduling threshold of the analysis device is determined by the analysis speeds of the analysis device for various items to be analyzed by the analysis device. In some specific embodiments, the analysis speeds of the analysis device for various items to be analyzed by the analysis device are multiplied by respective weights and summed up, and then the scheduling threshold of the analysis device is determined based on the obtained sum. In some embodiments, the weight of the item to be analyzed by the analysis device is negatively correlated to the analysis speed of the analysis device for the item. In some embodiments, the sum of the weights of the items to be analyzed by the analysis device is 1, that is, the weights of the items to be analyzed by the analysis device are normalized weights. Generally, the analysis device is configured with the most item types that can be supported. However, in an actual process, it is possible that a department only uses some of these items commonly, so the item to be analyzed by the analysis device herein refers to an item configured to be tested by the analysis device. The analysis speed of the analysis device to the item may be obtained by the statistics of historical data thereof, and can be updated regularly, for example, updated every week, every month or every two months. The weights corresponding to the items to be analyzed by the analysis device may be preset. An example to illustrate how to determine the scheduling threshold of the analysis device is described below. It is assumed that an analysis device M1 can support the tests of 25 items at most, i.e., A1 to A10, B1 to B5, and C1 to C10. However, only items A1 to A3 are used in a department, so the analysis device M1 may be configured to test three items of A1 to A3. It is assumed that the analysis speeds of the analysis device M1 to the items A1, A2, and A3 are V1, V2, and V3, respectively, V1 is greater than V2, and V2 is greater than V3. The weights of the items A1, A2, and A3 are a1, a2, and a3, respectively, a1 is less than a2, and a2 is less than a3, for example, a1, a2, and a3 are 20%, 30%, and 50%, respectively. The scheduling threshold of the analysis device M1 may be determined by the sum V obtained by the following formula: V=V1^{∗}a1+V2^{∗}a2+V3^{∗}a3.

The greater the V, the higher the speed of the analysis device M1 for analyzing, testing, or digesting the item, and correspondingly, the greater the scheduling threshold of the analysis device M1. For example, in some examples, when V is equal to 30 items per hour, the scheduling threshold of the analysis device M1 may be set as 3, that is, at most three sample racks are allowed in the front-end track area of the analysis device M1. When V is equal to 20 to 25 items per hour, the scheduling threshold of the analysis device M1 may be set as 2, that is, at most two sample racks are allowed in the front-end track area of the analysis device M1. When V is equal to 5 to 15 items per hour, the scheduling threshold of the analysis device M1 may be set as 1, that is, at most one sample rack is allowed in the front-end track area of the analysis device M1. The speed of the analysis device for analyzing, testing, or digesting the item is characterized by the scheduling threshold. The higher the overall speed of the analysis device for analyzing, testing, or digesting the items, the more samples are allowed in the front-end track area thereof simultaneously.

During a specific scheduling process, after a user places a sample into the input part 10, the processor 90 will generally acquire item information of the sample to be tested and determine a scheduling plan of the sample to be tested according to the item information. The scheduling plan at least includes a target analysis device that needs to perform item detection on the sample to be tested and a path for the sample to be tested to reach the target analysis device. For example, the processor 90 determines which items need to be performed on a sample on a sample rack, and then determines on which analysis devices these items will be tested. If some items for a sample S can only be tested on a specific analysis device, and other analysis devices do not support the tests of these items, the specific analysis device is a target analysis device for the sample S. If some items for the sample S may be tested on a plurality of analysis devices, for example, both the analysis device M1 and the analysis device M2 may support the tests of these items, then at least one of the analysis device M1 and the analysis device M2 may be selected as the target analysis device for the sample S. Specifically, in some embodiments, the processor 90 may determine a scheduling plan for each sample to be tested in the buffer area based on a load balancing principle of the analysis device after acquiring the item information of the sample to be tested. A specific process is described below. A user places a sample into the input part 10. The input part 10 schedules the sample to be tested to the buffer area for temporary storage. The processor 90 receives and acquires the item information of the sample to be tested, and then determines a scheduling plan for the sample to be tested in the buffer area according to the item information of the sample to be tested. For example, the processor 90 determines the respective scheduling plan for each sample to be tested based on the load balancing principle of the analysis device after acquiring the item information of the each sample to be tested.

Then, the processor 90 schedules each sample according to the scheduling plan. In some embodiments, the processor 90 acquires the scheduling threshold of the analysis device 30 and a load condition in the front-end track area of the analysis device. The processor 90 controls the scheduling of the sample, which currently needs to enter the front-end track area of the analysis device in order to be aspirated, according to a relationship between the scheduling threshold of the analysis device 30 and the load condition of the front-end track area of the analysis device 30. In some specific embodiments, if the load of the front-end track area of the analysis device 30 is less than or equal to the scheduling threshold of the analysis device 30, the processor 90 schedules the sample, which currently needs to enter the front-end track area of the analysis device 30 in order to be aspirated, to the front-end track area of the analysis device 30. If the load of the front-end track area of the analysis device 30 is greater than the scheduling threshold of the analysis device 30, the processor 90 controls the sample, which currently needs to enter the front-end track area of the analysis device 30, to wait in the buffer area.

As described above, if the load of the front-end track area of the analysis device 30 is greater than the scheduling threshold of the analysis device 30, the processor 90 controls the sample, which currently needs to enter the front-end track area of the analysis device 30, to wait in the buffer area; and after that, the processor 90 further determines whether the load of the front-end track area of another target analysis device for the sample is less than or equal to the scheduling threshold thereof, if so, the processor 90 controls to schedule the sample to the front-end track area of the another target analysis device for aspirating.

Generally, if the load of the front-end track area of the analysis device 30 is less than or equal to the scheduling threshold of the analysis device 30, then the front-end track area of the analysis device is not fully loaded. It can be understood that the front-end track area of the analysis device 30 has a certain range to carry one or more sample racks, for example, three sample racks. If the front-end track area of the current analysis device 30 has carried three sample racks which are being fed or to be fed, then the front-end track area of the analysis device 30 is fully loaded. Otherwise, the front-end track area of the analysis device 30 is not fully loaded. Taking the sample analysis system in FIG. 5 or FIG. 6 as an example. It is assumed that both the feeding track 31 and the emergency track 32 in the front-end track area of each analysis device can carry three sample racks, when a feeding track 31 of an analysis device carries three sample racks with samples being aspirated or to be aspirated by the analysis device, the front-end track area of the analysis device is fully loaded for a sample S1 that needs to be fed by the feeding track 31 of the analysis device. Otherwise, the front-end track area of the analysis device is not fully loaded. Similarly, when an emergency track 32 of an analysis device carries three sample racks with samples being aspirated or to be aspirated by the analysis device, the front-end track area of the analysis device is fully loaded for a sample S2 that needs to be fed by the emergency track 32 of the analysis device. Otherwise, the front-end track area of the analysis device is not fully loaded.

As described above, generally, if the load of the front-end track area of the analysis device 30 is less than or equal to the scheduling threshold of the analysis device 30, the front-end track area is not fully loaded. However, in order to ensure this, the load condition of the front-end track area may also be determined. For example, in some embodiments, the processor 90 further determines whether the front-end track area of the analysis device is fully loaded, and directly controls the sample, which currently needs to enter the front-end track area of the analysis device in order to be aspirated, to wait in the buffer area without comparing the load of the front-end track area of the analysis device 30 with the scheduling threshold of the analysis device 30, when it is determined that the front-end track area of the analysis device is fully loaded. The processor 90 further controls the scheduling of the sample, which currently needs to enter the front-end track area of the analysis device in order to be aspirated, according to the relationship between the scheduling threshold of the analysis device 30 and the load of the front-end track area of the analysis device 30, when it is determined that the front-end track area of the analysis device is not fully loaded.

Similarly, the processor 90 controls the sample, which currently needs to enter the front-end track area of the analysis device 30, to wait in the buffer area. After that, the processor 90 may further determine whether a front-end track area of another target analysis device for the sample is not fully loaded and the load is less than or equal to the scheduling threshold. If so, the processor 90 controls the sample to be scheduled to the front-end track area of another target analysis device for aspirating.

The above is some description of the sample analysis system. Some embodiments of the invention further disclose a sample scheduling method for a sample analysis system. The structure of the sample analysis system involved here may be the sample analysis system disclosed in any embodiment herein. For example, the sample analysis system has a buffer area and includes a plurality of analysis devices.

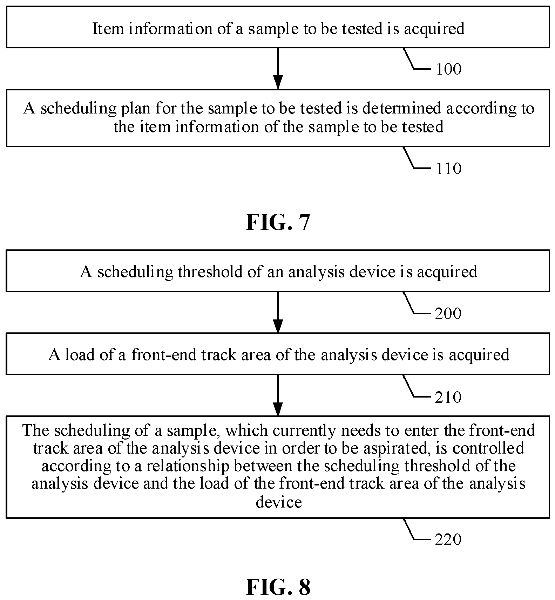

Referring to FIG. 7, the sample scheduling method according to some embodiments includes the following operations.

At block 100, item information of a sample to be tested is acquired.

At block 110, a scheduling plan for the sample to be tested is determined according to the item information of the sample to be tested. The scheduling plan at least includes a target analysis device that needs to perform item detection on the sample to be tested and a path for the sample to be tested to reach the target analysis device.

For example, at block 110, which items need to be performed on a sample on a sample rack are determined, and then on which analysis devices these items are tested are determined. If some items for a sample S can only be tested on a specific analysis device, and other analysis devices do not support the tests of these items, then the analysis device is a target analysis device for the sample S. If some items for the sample S may be tested on a plurality of analysis devices, for example, both the analysis device M1 and the analysis device M2 may support the tests of these items, then at least one of the analysis device M1 and the analysis device M2 may be selected as the target analysis device for the sample S. Specifically, in some embodiments, at block 110, a scheduling plan for each sample to be tested in the buffer area may be determined based on a load balancing principle of the analysis device after the item information of the sample to be tested is acquired at block 100. A specific process is described below. A user places a sample into an input part. The input part schedules each sample to be tested to a buffer area for temporary storage. At block 100, the item information of each sample to be tested is received and acquired, and then at block 110, a scheduling plan for each sample to be tested in the buffer area is determined according to the item information of each sample to be tested. For example, the scheduling plan for each sample to be tested is determined based on the load balancing principle of the analysis device after the item information of each sample to be tested is acquired.

How to perform the specific scheduling is described below. Referring to FIG. 8, a sample scheduling method according to some embodiments includes the following operations.

At block 200, a scheduling threshold of an analysis device is acquired. The scheduling threshold of the analysis device characterizes a speed of the analysis device for analyzing, testing, or digesting an item. Further explanation and calculation of the scheduling threshold may refer to the records hereinbefore, which will not be elaborated herein.

At block 210, a load of a front-end track area of the analysis device is acquired.

At block 220, the scheduling of the sample, which currently needs to enter the front-end track area of the analysis device in order to be aspirated, is controlled according to a relationship between the scheduling threshold of the analysis device and the load of the front-end track area of the analysis device.

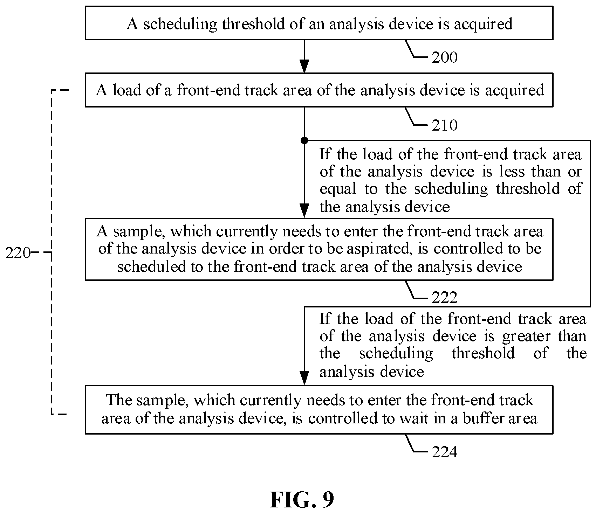

Referring to FIG. 9, in some embodiments, the operation at block 220 may include the following actions.

At block 222, if the load of the front-end track area of the analysis device is less than or equal to the scheduling threshold of the analysis device, a sample, which currently needs to enter the front-end track area of the analysis device in order to be aspirated, is controlled to be scheduled to the front-end track area of the analysis device.

At block 224, if the load of the front-end track area of the analysis device is greater than the scheduling threshold of the analysis device, then the sample, which currently needs to enter the front-end track area of the analysis device, is controlled to wait in a buffer area.

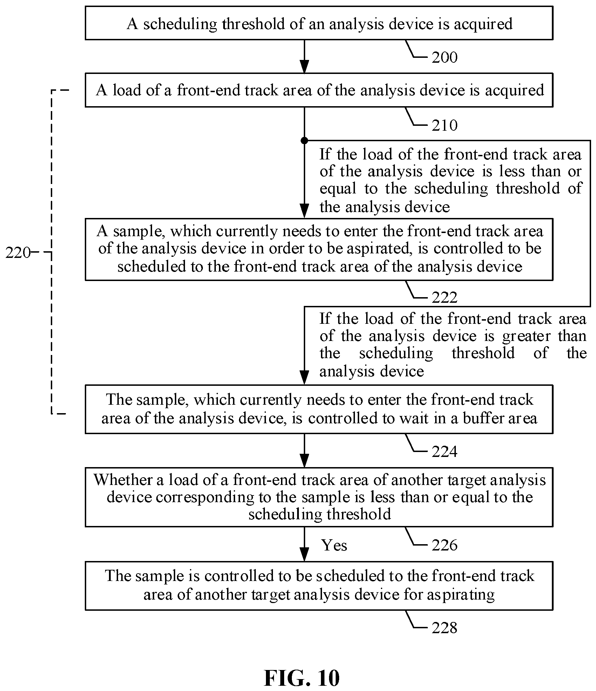

Referring to FIG. 10, the sample scheduling method according to some embodiments may further include the following operations.

As described above, if the load of the front-end track area of the analysis device is greater than the scheduling threshold of the analysis device, then, at block 224, the sample, which currently needs to enter the front-end track area of the analysis device, is controlled to wait in the buffer area.

After the operation at block S224, whether the load of the front-end track area of another target analysis device for the sample is less than or equal to the scheduling threshold is further determined at block 226. If the load of the front-end track area of another target analysis device for the sample is less than or equal to the scheduling threshold (referring to the scheduling threshold of another target analysis device), then at block 228, the sample is controlled to be scheduled to the front-end track area of another target analysis device for aspirating.

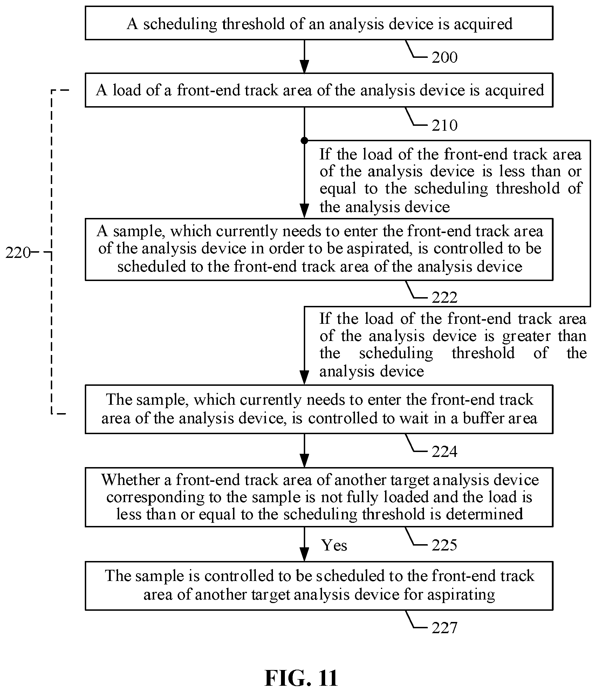

Alternatively, as shown in FIG. 11, in some embodiments, after the operation at block 224, whether the front-end track area of another target analysis device is not fully loaded and the load is less than or equal to the scheduling threshold (referring to the scheduling threshold of another target analysis device) is further determined at block 225. If so, at block 227, the sample is controlled to be scheduled to the front-end track area of the another target analysis device for aspirating.

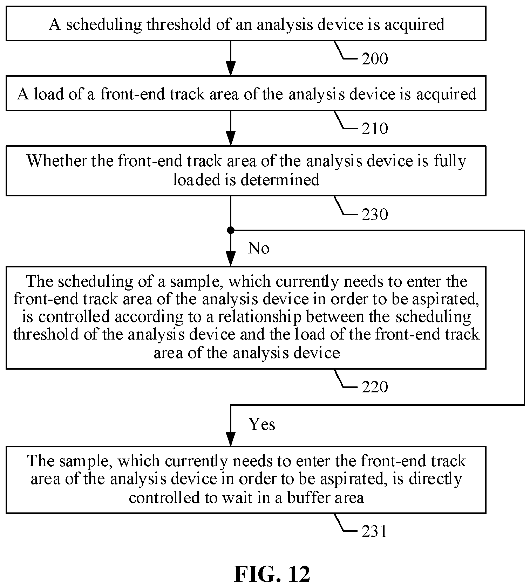

Referring to FIG. 12, a sample scheduling method according some embodiments may further include the following operations.

At block 230, whether the front-end track area of the analysis device is fully loaded is determined. It can be understood that, the block 230 may be previous to the block 220, or may be previous to the block 222 that the sample, which currently needs to enter the front-end track area of the analysis device in order to be aspirated, is controlled to be scheduled to the front-end track area of the analysis device.

At block 231, when it is determined that the front-end track area of the analysis device is fully loaded, the sample, which currently needs to enter the front-end track area of the analysis device in order to be aspirated, is controlled to wait in the buffer area.

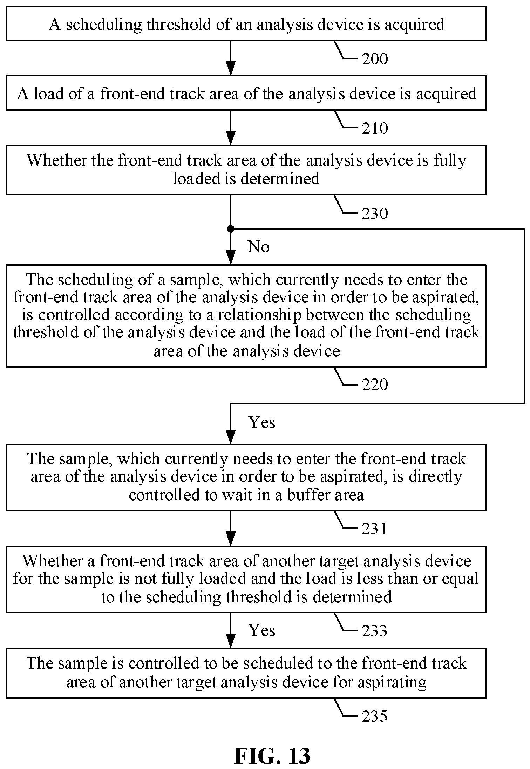

Referring to FIG. 13, a sample scheduling method according to some embodiments may further include the following operations.

As described above, when it is determined that the front-end track area of the analysis device is fully loaded, the sample, which currently needs to enter the front-end track area of the analysis device in order to be aspirated, is directly controlled to wait in the buffer area at block 231.

After the operation at block 231, at block 233, whether the front-end track area of anther target analysis device for the sample is not fully loaded and the load is less than or equal to the scheduling threshold is further determined. If so, at block 235, the sample is controlled to be scheduled to the front-end track area of the another target analysis device for aspirating.

The invention is described with reference to various exemplary embodiments. However, those skilled in the art will recognize that changes and modifications may be made to the exemplary embodiments without departing from the scope of the invention. For example, various operation steps and the components arranged to perform the operation steps can be implemented in different modes according to the specific application or considering any number of cost functions associated with the operation of the system (for example, one or more steps can be deleted, modified or combined into other steps).

The abovementioned embodiments may be implemented completely or partially through software, hardware, firmware, or any combination thereof. In addition, as understood by those skilled in the art, the principle of the invention can be reflected in a computer program product on a computer-readable storage medium. The computer-readable storage medium is per-installed with computer-readable program codes. Any tangible and non-transitory computer-readable storage medium can be used, including magnetic storage devices (hard disk, floppy disk, etc.), optical storage devices (CD to ROM, DVD, Blu-ray disk, etc.), flash memory, and/or the like. These computer program instructions may be loaded to a general-purpose computer. a special-purpose computer, or other programmable data processing devices to form a machine, such that these instructions executed on the computer or other programmable data processing devices can generate an apparatus for implementing a specified function. These computer program instructions may also be stored in a computer-readable memory. The computer-readable memory may indicate the computer or other programmable data processing devices to run in a specified mode. Thus, the instructions stored in the computer-readable memory may form a manufactured product, including an apparatus for implementing a specified function. These computer program instructions may also be loaded onto the computer or other programmable data processing devices, such that a series of operating steps are performed on the computer or other programmable data processing devices to produce a computer-implemented process. Therefore, instructions executed on the computer or other programmable data processing devices can provide steps for implementing the specified functions.

Although the principles of the invention have been shown in various embodiments, many modifications to structures, arrangements, proportions, elements, materials, and parts that are particularly applicable to specific environmental and operational requirements may be used without departing from the principle and scope of the invention. The above modifications or other changes or amendments will fall within the scope of the invention.

The foregoing specific description has been described with reference to various embodiments. However, those skilled in the art will recognize that various changes and modifications may be made without departing from the scope of the invention. Accordingly, the description of the invention will be illustrative rather than restrictive, and all these modifications will fall within the scope thereof. Similarly, the advantages, other advantages, and solutions to problems have been described above with reference to various embodiments. However, the benefits, advantages, solutions to problems, and any solution that can produce these elements or make them more explicit should not be interpreted as critical, essential, or necessary. The term "include", "comprise" and any other variations thereof used herein are non-exclusive inclusions, so that a process, method, article or device that includes a list of elements includes not only these elements, but also other elements that are not explicitly listed or do not belong to the process, method, system, article or device. Further, the term "couple" and any other variations thereof used herein refer to a physical connection, an electrical connection, a magnetic connection, an optical connection, a communication connection, a functional connection, and/or any other connection.

Those skilled in the art will recognize that many changes can be made to the details of the abovementioned embodiments without departing from the basic principle of the invention. Therefore, the scope of the invention is limited only by the claims.

## Claims

1. A sample scheduling method for a sample analysis system, the sample analysis system having a buffer area and comprising a plurality of analysis devices, **characterized in that** the sample scheduling method comprises:
acquiring a scheduling threshold of an analysis device;
acquiring a load of a front-end track area of the analysis device;
in response to the load of the front-end track area of the analysis device being less than or equal to the scheduling threshold of the analysis device, controlling a sample, which currently needs to enter the front-end track area of the analysis device in order to be aspirated, to be scheduled to transfer to the front-end track area of the analysis device; and
in response to the load of the front-end track area of the analysis device being greater than the scheduling threshold of the analysis device, controlling the sample, which currently needs to enter the front-end track area of the analysis device, to wait in the buffer area.

2. The sample scheduling method of claim 1, further comprising:
acquiring item information of a sample to be tested and determining a scheduling plan for the sample to be tested according to the item information of the sample to be tested, wherein the scheduling plan at least comprises a target analysis device that needs to perform item detection on the sample to be tested and a path for the sample to be tested to reach the target analysis device.

3. The sample scheduling method of claim 2, wherein acquiring item information of a sample to be tested and determining a scheduling plan for the sample to be tested according to the item information of the sample to be tested comprises:
receiving and acquiring the item information of the sample to be tested;
controlling the sample to be tested to be scheduled to transfer to the buffer area for temporary storage; and
determining the scheduling plan for each sample to be tested in the buffer area according to the item information of each sample to be tested.

4. The sample scheduling method of claim 2, wherein determining the scheduling plan for each sample to be tested in the buffer area according to the item information of each sample to be tested comprises:
determining the scheduling plan for each sample to be tested based on a load balancing principle of the analysis device after acquiring the item information of each sample to be tested.

5. The sample scheduling method of claim 2, further comprising:
after controlling the sample, which currently needs to enter the front-end track area of the analysis device, to wait in the buffer area, determining whether a load of a front-end track area of another target analysis device corresponding to the sample is less than or equal to the scheduling threshold; and
in response to the load of the front-end track area of another target analysis device corresponding to the sample being less than or equal to the scheduling threshold, controlling the sample to be scheduled to transfer to the front-end track area of another target analysis device in order to be aspirated.

6. The sample scheduling method of claim 2, further comprising:
after controlling the sample, which currently needs to enter the front-end track area of the analysis device, to wait in the buffer area, determining whether a front-end track area of another target analysis device corresponding to the sample is not fully loaded and a load is less than or equal to the scheduling threshold; and
in response to the front-end track area of the another target analysis device corresponding to the sample being not fully loaded and the load being less than or equal to the scheduling threshold, controlling the sample to be scheduled to transfer to the front-end track area of the another target analysis device in order to be aspirated.

7. The sample scheduling method of claim 2, further comprising:
determining whether the front-end track area of the analysis device is fully loaded; and
directly controlling the sample, which currently needs to enter the front-end track area of the analysis device in order to be aspirated, to wait in the buffer area, when it is determined that the front-end track area of the analysis device is fully loaded.

8. The sample scheduling method of claim 7, further comprising:
after directly controlling the sample, which currently needs to enter the front-end track area of the analysis device in order to be aspirated, to wait in the buffer area, determining whether a front-end track area of another target analysis device corresponding to the sample is not fully loaded and a load is less than or equal to the scheduling threshold; and
in response to the front-end track area of the another target analysis device corresponding to the sample being not fully loaded and the load being less than or equal to the scheduling threshold, controlling the sample to be scheduled to transfer to the front-end track area of the another target analysis device in order to be aspirated.

9. The sample scheduling method of claim 1, further comprising:
determining the scheduling threshold of the analysis device based on analysis speeds of the analysis device for various items to be analyzed by the analysis device.

10. The sample scheduling method of claim 9, wherein determining the scheduling threshold of the analysis device based on analysis speeds of the analysis device for various items to be analyzed by the analysis device comprises:
multiplying the analysis speeds of the analysis device for various items to be analyzed by the analysis device by respective weights and summing the resulting analysis speeds, and determining the scheduling threshold of the analysis device based on the summation.

11. The sample scheduling method of claim 10, wherein a weight of an item to be analyzed by the analysis device is negatively correlated to an analysis speed of the analysis device for the item.

12. A sample analysis system, **characterized in that** the sample analysis system comprises:
an input part, arranged to receive a sample to be tested;
a plurality of analysis devices, arranged to test the sample, wherein each of the plurality of analysis devices is configured with a front-end track area, and the front-end track area is provided with a sample aspirating position;
a track, arranged to connect the input part and the plurality of analysis devices;
a scheduling apparatus, arranged to schedule the sample to transfer, through the track, from the input part to a front-end track area of an analysis device corresponding to the sample;
a buffer area, arranged to buffer the sample; and
a processor, arranged to acquire a scheduling threshold of the analysis device and a load of the front-end track area of the analysis device, wherein the processor is further arranged to control scheduling of a sample, which currently needs to enter the front-end track area of the analysis device in order to be aspirated, according to a relationship between the scheduling threshold of the analysis device and the load of the front-end track area of the analysis device.

13. The sample analysis system of claim 12, wherein when controlling the scheduling of the sample, which currently needs to enter the front-end track area of the analysis device in order to be aspirated, according to the relationship between the scheduling threshold of the analysis device and the load of the front-end track area of the analysis device, the processor is further arranged to:
control the sample, which currently needs to enter the front-end track area of the analysis device in order to be aspirated, to be scheduled to transfer to the front-end track area of the analysis device, when the load of the front-end track area of the analysis device is less than or equal to the scheduling threshold of the analysis device; and
control the sample, which currently needs to enter the front-end track area of the analysis device, to wait in the buffer area, when the load of the front-end track area of the analysis device is greater than the scheduling threshold of the analysis device.

14. The sample analysis system of claim 12, wherein the buffer area is arranged in the input part; and the processor is further arranged to: acquire item information of the sample to be tested and control the input part to schedule the sample to be tested to transfer to the buffer area for temporary storage; and determine a scheduling plan for each sample to be tested in the buffer area according to the item information of each sample to be tested, wherein the scheduling plan at least comprises a target analysis device that needs to perform item detection on the sample to be tested and a path for the sample to be tested to reach the target analysis device.

15. The sample analysis system of claim 14, wherein after controlling the sample, which currently needs to enter the front-end track area of the analysis device, to wait in the buffer area, the processor is further arranged to: determine whether a load of a front-end track area of another target analysis device corresponding to the sample is less than or equal to the scheduling threshold; and in response to the load of the front-end track area of the another target analysis device corresponding to the sample being less than or equal to the scheduling threshold, control the sample to be scheduled to transfer to the front-end track area of the another target analysis device in order to be aspirated.

16. The sample analysis system of claim 14, wherein the processor is further arranged to: determine whether the front-end track area of the analysis device is fully loaded; and directly control the sample, which currently needs to enter the front-end track area of the analysis device in order to be aspirated, to wait in the buffer area when it is determined that the front-end track area of the analysis device is fully loaded.

17. The sample analysis system of claim 16, wherein after directly controlling the sample, which currently needs to enter the front-end track area of the analysis device in order to be aspirated, to wait in the buffer area, the processor is further arranged to: determine whether a front-end track area of another target analysis device corresponding to the sample is not fully loaded and a load is less than or equal to the scheduling threshold; and control, when the front-end track area of the another target analysis device corresponding to the sample is not fully loaded and the load is less than or equal to the scheduling threshold, the sample to be scheduled to transfer to the front-end track area of the another target analysis device in order to be aspirated.

18. The sample analysis system of claim 12, wherein
the scheduling threshold of the analysis device is determined based on analysis speeds of the analysis device for various items to be analyzed by the analysis device;
the analysis speeds of the analysis device for various items to be analyzed by the analysis device are multiplied by respective weights and the resulting analysis speeds are summed up, and the scheduling threshold of the analysis device is determined based on the summation; and
a weight of an item to be analyzed by the analysis device is negatively correlated to an analysis speed of the analysis device for the item.

19. A computer-readable storage medium having stored therein a program that, when executed by a processor, causes the processor to implement the method of any one of claims 1 to 11.
